# EUROPEAN PATENT APPLICATION

(11) **EP 3 155 999 A1**
(43) Date of publication of application: **19.04.2017**
(21) Application number: 16193574.7
(22) Date of filing: 12.10.2016
(51) Int. Cl.: A61C 1/18, A61C 3/02, A61C 8/00, A61C 1/08

(54) **SURGICAL INSTRUMENT FOR DENTAL USE**

(30) Priority: 16.10.2015 IT UB20156564 U
(71) Applicant: Massimo Fossati, 50121 Firenze (IT)
(72) Inventor: Fossati, Massimo, 50121 Firenze (IT)
(74) Representative: Fanfani, Stefano

(57) **Abstract**

A surgical instrument, suitable in particular for raising-up a maxillary sinus, comprising a special milling cutter reversibly coupled with a shaft via a sleeve and a ring nut.

Said special milling cutter is movable between a work position wherein it is driven into rotation by the shaft and a rest position wherein it does not engage the head of the shaft and consequently becomes ineffective.

Because of the special coupling between the shaft and the milling cutter, as described below in the present patent application, whenever the milling cutter is in rotation it would tend to move away from the shaft, were it not for the countering action exerted by the patient's bone tissues. Thanks to this feature, the shearing action is zeroed as soon as the cutting edges finish to cut the hole and consequently get in contact with the softer and more delicate tissues beneath.

## Description

### Technical field

The present invention belongs to the sector of surgical instruments and tools, and in particular to dental instruments. The surgical instrument according to the present patent application can be preferably used in milling the bones during dental implantology operations, i.e. for realizing the cavity where the implant will be anchored.

### Present status of the art

In dentistry, bone milling operations are often ticklish because of the risk of damaging particularly soft and sensitive parts that are located immediately downstream of or close to the bone tissue submitted to the surgical intervention. For instance, this problem is experienced in raising-up the maxillary sinus, whereby a cavity is opened in the bone and subsequently a synthetic bone is injected. This operation can be performed by operating laterally or on the crestal line by operating from down up, which results in a lower impact onto the patient. However, in this latter case, the doctor shall pay an extreme attention in withdrawing the dental drill as soon as bone drilling is completed, in order to prevent the sinus membrane, or Schneiderian membrane, from being damaged; all of this without being able to monitor the progress of the cutting edges of the milling cutter nor being able to preliminarly and exactly know the depth of the bone.

### Objects and summary of the invention

In many surgical operations, for instance in raising-up a maxillary sinus, the need thus arises for a milling cutter capable of zeroing its own cutting action as soon as it gets in contact with soft or delicate parts. Also, the field of application is such that the device must be safe, quick, and simple to assemble, and easily washable or sterilizable.

The surgical instrument according to the present patent application accomplishes these objects and others which will be apparent after reading the present patent application.

Said instrument comprises a shank type milling cutter, axially slidable internally to a sleeve, capable of passing from a retracted work position to a rest position where it protrudes more from the sleeve.

The subject shank-type milling cutter is of a special type, its cutting part being limited to the head only. In its retracted work position, the tang of the milling cutter is in contact with the head of a shaft which drives it into rotation, the latter being driven into rotation with respect to its own longitudinal axis by a dental drill.

In the rest position the milling cutter is not driven any longer by the shaft, no contact being present between the two elements.

Advantageously are the shaft and the milling cutter provided with reciprocal engagement means which foster transmission of motion, for instance recesses and projections on their facing surfaces. Transmission of motion might even take place by friction.

In proximity to the inner end, the outer diameter of the tang of the sleeve increases, thus creating a shoulder which is held internally to a cylindrical ring nut, the latter being coaxial and made reversibly integral to the head of the shaft.

According to a convenient and practical embodiment, the ring nut is threaded so as to screw in a corresponding threading present on the head of the shaft.

So, when the instrument is in use, the ring nut rotates together with the shaft, whereas no driving effect brings the sleeve into rotation because of the clearances between the elements.

However, the sleeve is driven into rotation by at least one, preferably cylindrical, bulge which projects from the outer surface of the tang of the milling cutter and engages a respective inclined groove cut in the inner surface of the cylindrical tang of the sleeve.

Said inclined groove being laid on a cylindrical surface, it is substantially shaped as a piece of a special helix, whose pitch can be either constant or variable, but is always such as to react to the projecting bulge with a force which is decomposable into an axial component and a tangential component.

Very usefully, the helix of said inclined groove evolves according to the direction of rotation of the shaft so as to facilitate the disengagement of the tang of the milling cutter from the head of the latter as soon as the cutting edges of the milling cutter are not countered any longer. As a matter of fact, since the bulge is free of sliding internally to the inclined groove, the rotation that the milling cutter is subjected to not only drives the sleeve into rotation, but it also generates a thrust which moves the bulge away from the shaft. Thus, when the cutting edges of the milling cutter are not countered any longer by the bone tissue, the tang of the milling cutter moves away from the head of the shaft and separates the reciprocal engagement means, so that the milling cutter and the sleeve tend to stop.

To make sure that the dentist easily notices having completed the drilling of the bone tissue, special visual indicators are advantageously provided.

In a preferred embodiment, this separation can be noticed by looking at a set of vertical axial marks located on the outer surface of the sleeve, made for instance by laser cutting.

Said vertical axial marks are particularly effective because, by virtue of the speed of rotation of the shaft, the separation of the milling cutter, as well as the deceleration of the milling cutter itself and of the sleeve, are sudden. The special visual indicators enable the dentist to promptly stop the dental drill and consequently the rotation of the shaft and of the ring nut. Advantageously can the milling cutter be properly engineered in order to limit its maximum protrusion with respect to the outer end of the sleeve, so that the latter, not being able to pass through the hole drilled by the cutting edges of the milling cutter, prevents the cutting edges from going on further, thus operating as a safety locking element. In a preferred embodiment, in the rest position, the cutting edges of the milling cutter project by two millimeters from the end of the sleeve.

Further, the outer surface of the sleeve can advantageously present proper channels to make blood evacuation easier. The sleeve might also be tapered toward the free end, to increase the surface that engages the patient's tissues, so as to make its safety blocking function more effective. Usually, when raising-up a maxillary sinus, the sleeve penetrates the bone tissue in that the gingival tissue is previously separated for a better visibility of the crestal anatomy; however, said sleeve might even penetrate soft parts, should the surgical intervention not entail a separation of the gingival tissue. If appropriate, the tapered end of the sleeve might also be provided with cutting teeth to make the penetration of the sleeve into the tissue easier.

### Brief description of the drawings

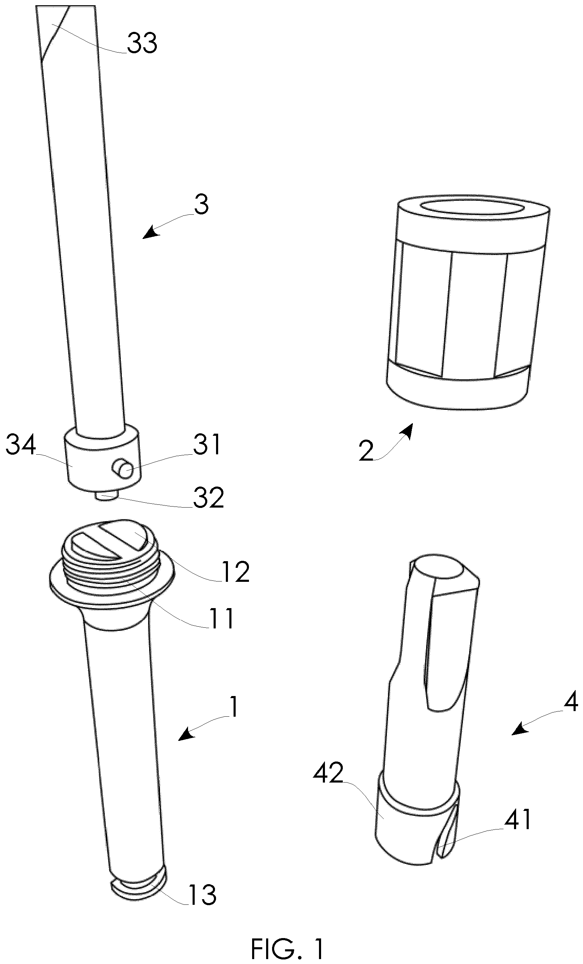

Fig. 1 shows an exploded view of an embodiment of the surgical instrument according to the present patent application, wherein the following component parts can be identified: the threading (11) and the engagement means (12) and connection means (13) of the shaft (1); the bulge (31) and the projections (32) of the tang (34) of the milling cutter (3) provided with cutting edges (33); the inclined groove (41) on the tang (42) of the sleeve (4) and the ring nut (2).

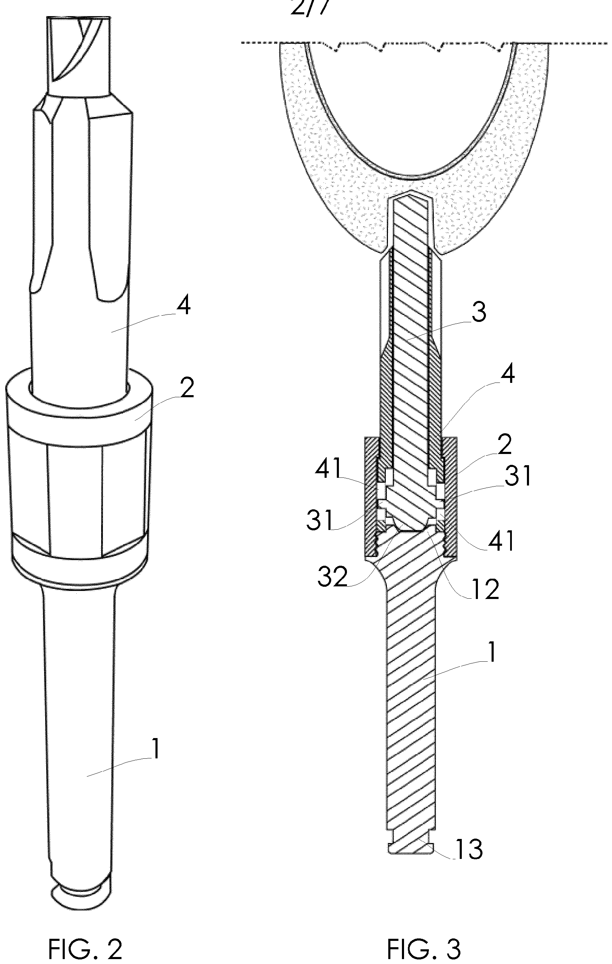

Fig. 2 shows an axonometric view of the instrument of the previous figure in its operating condition, the ring nut (2) enclosing the tang of the sleeve (4) on the shaft (1).
Fig. 3 is a cross-sectional view which illustrates the operation of an embodiment of the subject surgical instrument in its work position, i.e. while the cutting edges of the milling cutter (3) are operating on the bone tissue and counter the going away of the engagement means (32, 12) of the milling cutter (3) and of the shaft (1) used to transmit the torque. The inclined grooves (41) of the sleeve (4) are shown in their full extension to make it possible to observe the movement of their respective bulges (31) from the work position to the rest position, as shown in the next figure. The figure also shows how the ring nut (2) holds the tang of the sleeve onto the shaft (1).

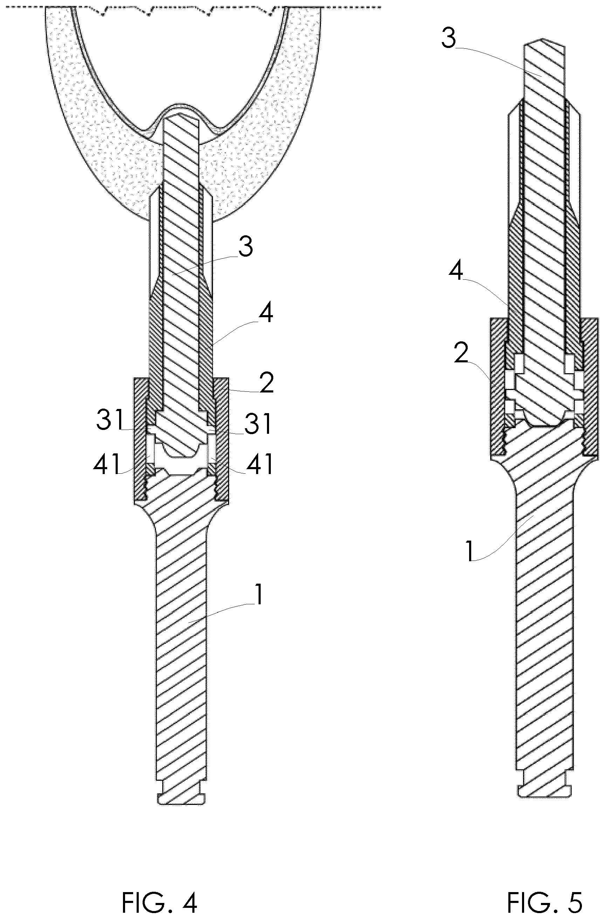

Fig. 4 shows the previous cross-sectional view, the surgical instrument being in its rest position, i.e. the milling cutter (3) not being in contact with the shaft (1), hence ineffective. Since there is no countering action from the bone tissue, the force generated onto the bulge (31) made the milling cutter move away, as noticeable from the position of the bulge (31) itself within the inclined groove (41) of the sleeve (4).

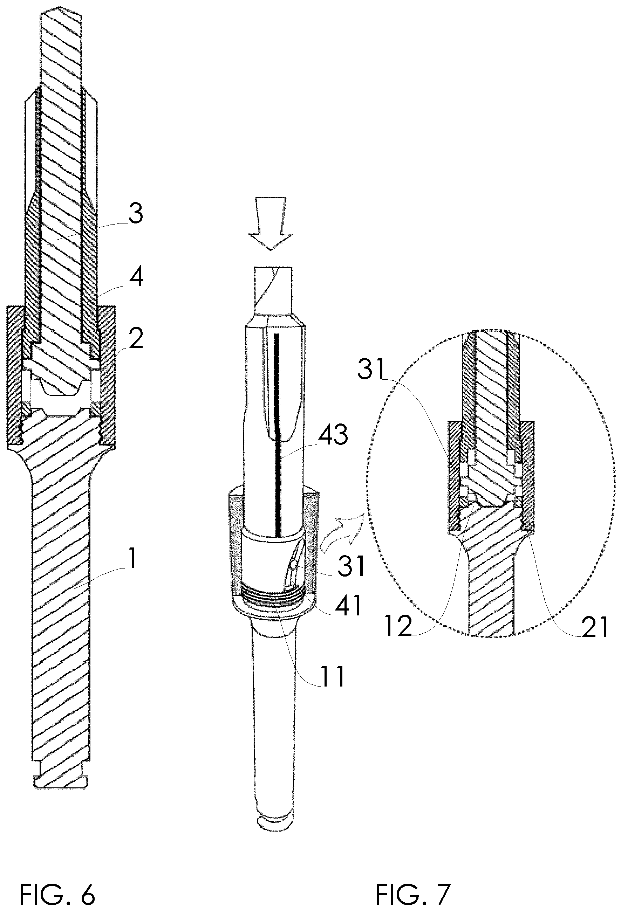

Fig. 5 and Fig. 6 show the instrument of two preceding figures, extrapolated from the specific context, in the work and rest positions respectively.

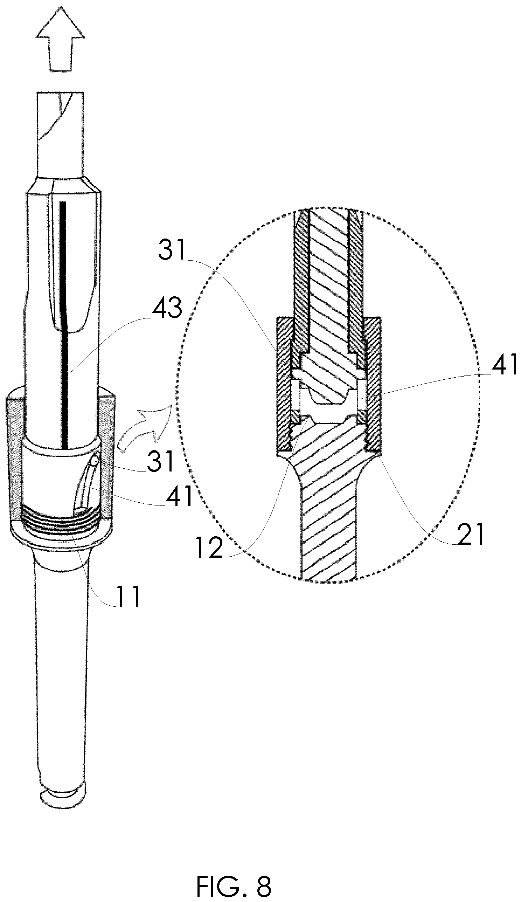

Fig. 7 and Fig. 8 show the work and rest positions respectively and make it possible a comparison between a cross-sectional view and an axonometric view, the ring nut (2) being shown only partially in order to appreciate the movement of the bulge (31) in the inclined groove (41). The figures also show the vertical visual indicators (43) on the sleeve, the threading (11) of the shaft (1), and the threading (21) of the ring nut (2).

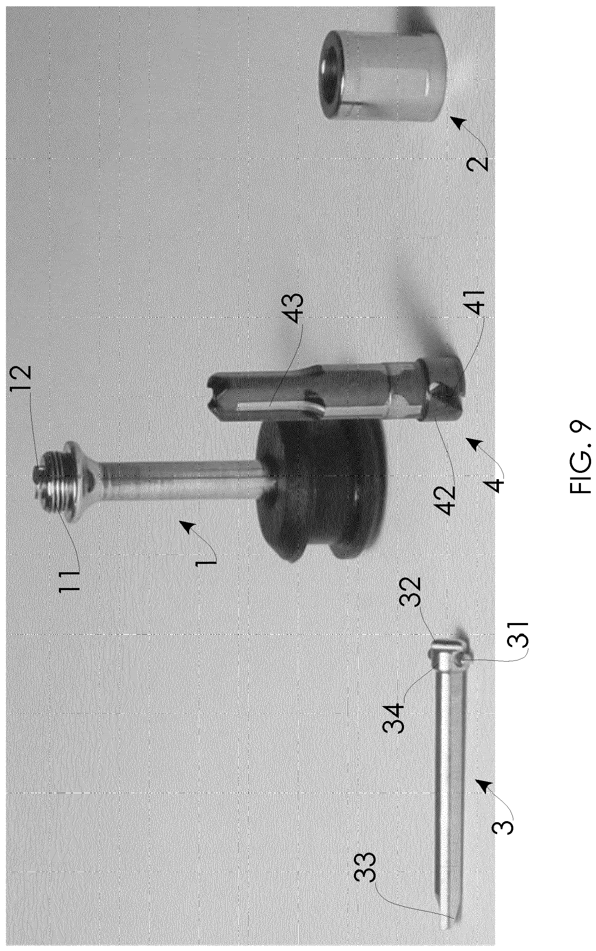

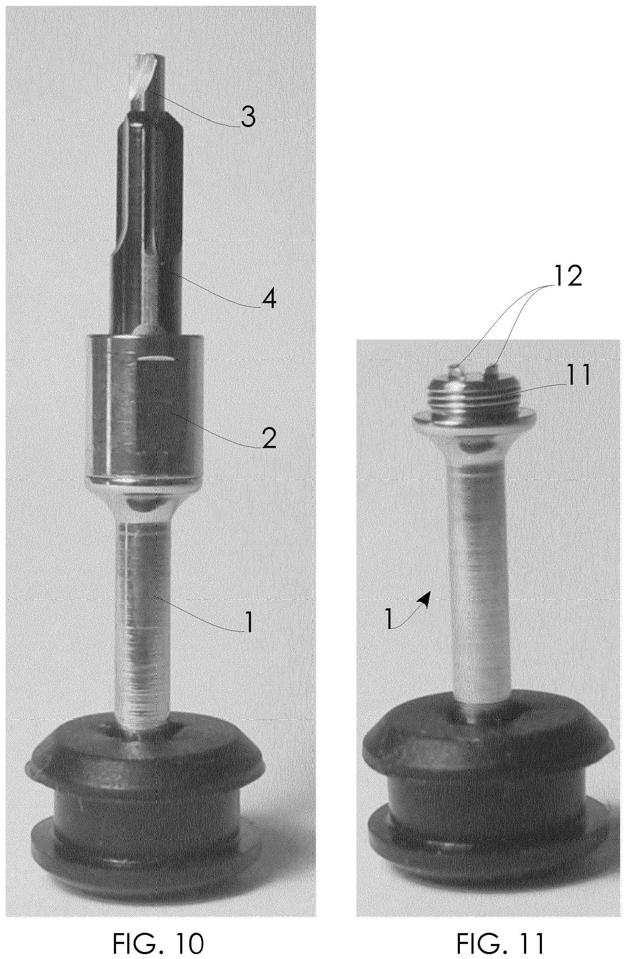

Fig. 9, Fig. 10, and Fig. 11 show photographs of an embodiment of the instrument according to the present patent application. The black axial-symmetrical body shown in all photographs has the only purpose of keeping the elements in a vertical position and is not part of the invention.

### Detailed description of an embodiment of the invention

In a preferred embodiment, the surgical instrument for milling bone tissues according to the present patent application comprises a shaft (1), a ring nut (2), a shank-type milling cutter (3), and a sleeve (4).

Said shaft (1) develops along a longitudinal axis about which it is driven into rotation by a dental drill, or a similar device, which connection means (13) are connected to; the dental drill is not part of the invention.

The cutting edges of said shank-type milling cutter (3) are arranged on the head, which protrudes from said sleeve (4) which slidingly receives its shank. The end of the shank of the milling cutter (3) opposite to the cutting edges, also referred to as tang (34), includes engagement means (32) which co-operate with respective means (12) present on the head of said shaft (1) from which it thus receives motion. Advantageously are these engagement means (12, 32) axially reversible, i.e. their engagement and disengagement take place by bringing the milling cutter (3) closer to or moving it away from the shaft (1) along the axis of rotation thereof.

Consequently, the milling cutter (3) of said surgical instrument passes from a retracted work position, wherein its head is little projecting from the sleeve and said engagement means (12, 32) are engaged, to an extracted rest position, wherein said means (12, 32) are disengaged; in the latter position, the projection of the head from the sleeve is greater.

In the embodiment here described the milling cutter includes a central projection which co-operates with two inclined projections facing each other to form a "V"-shaped recess on the head of the shaft (1).

Said sleeve (4) includes a terminal part featuring a greater diameter which forms a tang (42), the latter is held by a ring nut (2) in proximity to the head of said shaft (1) integrally connected to the ring nut by reversible means. In the embodiment here described the head of the shaft (1) is threaded to engage the nut screw (21) of the ring nut (2).

The coupling between the ring nut (2) and the sleeve (4) has a clearance and these two coaxial elements are free to reciprocally rotate; the ring nut (2) rotates integrally with the shaft (1).

On the inner surface of the tang (42) of said sleeve (4) there are two inclined grooves (41), each of which slidingly receives a respective cylindrical bulge (31) which radially projects from the cylindrical lateral surface of the milling cutter (3).

In the embodiment here described the inclined grooves are through passing ones, to make their manufacturing easier and more economical.

By developing the cylindrical surface of the tang (42) of the sleeve (4) on a plane, one obtains a rectangle on which lies the inclined groove (41), which is inclined with respect to all sides of the rectangle.

In this way, when the milling cutter (3) is driven into rotation, a tangential force acts onto each of said bulges (31) which drives the sleeve into rotation, as well as an axial force which would cause a roto-translation of the milling cutter (3), i.e. its axial translation in the direction opposite to the shaft.

The inclined grooves and the bulges make thus it possible to provide a reliable disengagement of the milling cutter (3) from the shaft whenever no pressure sufficient to counter the axial thrust is exerted onto the cutting edges. With reference to the development of the cylindrical surface as described above, in order to make sure that such thrust is capable of moving the milling cutter (3) away from the shaft (1) the acute angle formed between the inclined groove and the side originated from the development of the end circumference shall open in the direction of rotation.

Advantageously the outer surface of said sleeve (4) has a number of channels or grooves facilitating the flowing down of liquids during the surgical intervention and the end opposite to the tang is tapered outwards.

The tapered part of the sleeve (4) also comprises cutting edges featuring a reduced cutting capability which foster the seizing up of the sleeve and its safety blocking function.

The visual indication of the disconnection of the milling cutter (3) from the shaft (1), i.e. of the end of bone processing, is warranted by the presence, on said sleeve (4), of vertical sections (43) having a color different from that of the surrounding zones. Said vertical sections become distinguishable upon reduction of the speed of rotation of the sleeve (4) which, after disconnection of the milling cutter, rapidly tends to get still.

In particular, in the embodiment here described, each of the three cutting edges of the sleeve (4) is provided with a vertical section (43) obtained by laser cutting.

## Claims

1. A surgical instrument for milling bone tissues comprising a milling cutter (3), whose cutting edges (33) are arranged on a head that protrudes from a sleeve (4) which slidingly receives its shank; at the end of the latter the tang (34) of said milling cutter (3) presents axially reversible engagement means (32), by means of which it receives motion from corresponding engagement means (12) present on the head of the shaft (1); to said shaft (1) a ring nut (2) being integrally connected, by way of reversible means, which holds the tang (42) of said sleeve (4) in proximity to the head of said shaft (1), while making it free to rotate, **characterized in that** the inner surface of the tang of said sleeve (4) presents at least one inclined groove (41) in which at least one respective bulge (31) runs, projecting from the lateral surface of the milling cutter (3); so that said milling cutter (3) passes from a retracted work position, wherein said engagement means (32, 12) of the milling cutter (3) and of the shaft (1) respectively are engaged, to an extracted rest position, wherein said means (32, 12) of the milling cutter (3) and of the shaft (1) are disengaged.

2. A surgical instrument according to the previous claim 1 **characterized in that** it comprises on the outer surface of said sleeve (4) at least one visual rotation indicator which displays the passage from said retracted work position to said extracted rest position.

3. A surgical instrument according to the previous claim 2 **characterized in that** said at least one visual indicator comprises vertical marks (43) placed on the outer surface of said sleeve (4).

4. A surgical instrument according to the previous claim 3 **characterized in that** said vertical marks (43) are produced by way of laser cutting.

5. A surgical instrument according to any of the previous claims **characterized in that** said engagement means (12) of said shaft (1) comprise at least one recess co-operating with at least one projection which axially projects from said tang (34) of said milling cutter (3).

6. A surgical instrument according to the previous claim 5 **characterized in that** said at least one projection co-operates with two inclined projections facing each other to form a "V"-shaped recess on the head of the shaft (1).

7. A surgical instrument according to any of the previous claims **characterized in that** said milling cutter (3) is a shank-type milling cutter with its teeth arranged frontally.

8. A surgical instrument according to any of the previous claims **characterized in that** said sleeve (4) is tapered towards the free end.

9. A surgical instrument according to any of the previous claims **characterized in that** the outer surface of said sleeve (4) presents channels.

10. A surgical instrument according to any of the previous claims **characterized in that** the outer end of said sleeve (4) comprises cutting edges.

11. A surgical instrument according to the previous claim 10 **characterized in that** said vertical marks (43) are subtended by said cutting edges of said sleeve (4).

12. A surgical instrument according to any of the previous claims **characterized in that** the head of said shaft (1) is made integral with the ring nut (2) by way of a threaded coupling.

13. A surgical instrument according to any of the previous claims **characterized in that** said projecting bulge (31) of said milling cutter (3) is shaped like a cylinder radially arranged with respect to the axis of said milling cutter (3).

14. A surgical instrument according to any of the previous claims **characterized in that** said at least one inclined groove (41) is a through passing one from the inner surface to the outer surface of the tang (42) of said sleeve (4).

15. A surgical instrument according to any of the previous claims **characterized in that** it is exclusively formed of said shaft (1), said ring nut (2), said milling cutter (3), and said sleeve (4).
